Europäisches Patentamt

European Patent Office

Office européen des brevets

(11) Publication number: **0 095 354**
**A1**

# EUROPEAN PATENT APPLICATION

(21) Application number: **83302919.2**

(22) Date of filing: **20.05.83**

(51) Int. Cl.³: **B 01 D 46/26**
**A 47 L 9/10**

(30) Priority: **24.05.82 US 381400**
**02.05.83 US 490888**

(43) Date of publication of application:
**30.11.83 Bulletin 83/48**

(84) Designated Contracting States:
**AT BE CH DE FR GB IT LI LU NL SE**

(71) Applicant: **Rotoclean Industrial Corporation**
**1761 Bowman Avenue**
**Coquitlam British Columbia, V3J 6C9(CA)**

(72) Inventor: **Matyas, Laszlo B.**
**1761 Bowman Avenue**
**Coquitlam British Columbia V3J 6C9(CA)**

(74) Representative: **Haggart, John Pawson et al,**
**Page, White & Farrer 5 Plough Place New Fetter Lane**
**London, EC4A 1HY(GB)**

(54) A dust and fume collector.

(57) A dust and fume collector has a filter chamber (10) with a dirty gas inlet (12) and a clean gas outlet (14) and a rotary drum (16) intermediate the gas inlet (12) and the gas outlet (14). The rotary drum (16) has a cylindrical surface which is permeable to the gas and provides filtering of the latter as well as gaseous communication between the inlet (12) and outlet (14). Means are provided for rotating the drum (16) at a predetermined speed. The chamber (10) has a hopper means (20) for collecting particulate matter deposited by the incoming gas and thrown off of the drum (16) and a fan (27) moves the gas from the inlet through the filter element (18) into the interior of the drum (16) and out an outlet end thereof. The gas inlet (12) is a conduit which directs incoming gas towards the hopper means (20) such that incoming gas does not impinge directly on the cyclindrical surface of the drum (16). The conduit (12) is sufficiently close to the drum (16) so that a gas flow takes place towards the drum (16).

FIG.2.

## A DUST AND FUME COLLECTOR

The present invention relates to a dust and fume collector.

Existing dust and fume collectors employ a plurality of spaced apart filter bags suspended from a common platform. Gas, (usually dust and fume laden air) is drawn into the bottom of the structure through the bags and out through the top thereof. The gas flow through the bags may be from inside to outside or vice versa. Dirt and fumes in the gas are generally deposited in the filter material as the gas passes through the latter. Once the filter bags become clogged with dust it is necessary to clean them in order to restore their filtering capability. One method of cleaning the bags is to establish a reverse flow through the bags in order to allow them to collapse and break the dust cake off of the fabric. The latter method would be used where the normal flow of air being filtered is from inside the bag to outside the bag. In the course of establishing such a reverse flow it is necessary to shut down a portion of the filtering system which contains those bags being cleaned. If a continuous filtering operation is required it is necessary for the remaining bags in the system to handle the gas flow. As a consequence, the overall system must be designed with an excess number of bags at a correspondingly greater cost.

A second method of cleaning the bags when clogged involves the use of compressed air in a reverse jet through the filter bag. Even in installations which continuously clean the bags by the use of travelling devices which move across the surface of the bags the reverse jet cleaning operation not only involves the use of expensive compressed air but results in substantial stress on the filter material reducing substantially the filter material lifetime.

A third method of cleaning involves shaking, either intermittently or continuously, the filter bag tubes. Similar to the first mentioned system of cleaning the bags the latter system requires the compartment containing tubes to be cleaned to be shut down while the remaining compartments handle the gas flow.

Static systems such as the foregoing require a large number of tubes to obtain the required filtering area and a correspondingly large support structure to house the tubes. Typical installations may involve a structure which is three stories in height and occupies the floor area equivalent to that of a small house.

After operation for a period of time the bags develop a large pressure drop which requires a substantial pressure differential and a correspondingly higher energy requirement to operate such fans.

All three methods of cleaning place significant stresses on the filter cloth and result in a relatively short lifetime for the bags. The cost of fabrication of the bags, moreover, is high due to the large complicated shapes involved and the expense of the material of the bag itself.

After a cleaning operation the bags are left without a thin layer of dust that is established during the initial filtering stage and which considerably assists in the filtering process itself. Thus, following use of a cleaned bag, dirty gas escapes until a new layer of dust is built up in the filter bag.

Finally static systems utilize a large number of moving parts which are expensive to maintain and often result in costly shut downs.

Known rotary systems for separating dust particles from dirty gas such as U.S. Patent 3,443,696 issued 13 May, 1969 to Schutte allow the incoming gas to impinge directly on the surface of the cylindrical filter element thereby drastically reducing the lifetime of the filter as well as causing the particles of the incoming gas to be scattered throughout the chamber. U.S. Patent 2,648,396 issued to Kirby on 11 August, 1953 direct incoming dirty gas up toward the cylindrical filter after passing through the bottom of the chamber proximate a dust box. Aside from the problems of scattering dust throughout the chamber and reducing the lifetime of the filter element, the Kirby device employs the filter element on the interior of a perforated metal sleeve. The consequent resistance of gas flow toward the filter is created by the pumping action of the perforations as the drum rotates.

A second problem common to prior devices is in the sealing between the dirty gas chamber and the clean gas outlet. In Schutte, a pressure seal is set up whereby a region intermediate the dirty gas portion of the chamber and a clean gas portion is pressurized with a fluid with pressure slightly higher than that in the dirty gas portion of the chamber so that clean gas is permitted to escape into the dirty gas portion to prevent dirty gas from being drawn into the pressurized region. A similar arrangement is disclosed by Kirby. As a result of this latter arrangement, a curtain of clean gas from the seal is set up around the rotating drum thereby impeding the flow of dirty gas toward the drum.

Finally, in known devices the cylindrical filter element is held in contact with a perforated sleeve so that the effect of the filtering area of the filter element is limited to the open area of the perforations. As a result, the effect of the filtering area is reduced by approximately 50% or more, depending on the ratio of the open area of the perforations to the total area of the sleeve. Commercially available stock perforated metal can be obtained with a ratio of open area to a total area of up to a maximum of 65% unless special expensive manufacturing techniques are employed in which case ratios of up to approximately 70% can be achieved.

According to the invention there is provided a dust and fume collector comprising a filter chamber having a dirty gas portion and a clean gas portion, a dirty gas inlet for directing a flow of dirty gas into the dirty gas portion of said chamber, a clean gas outlet from said chamber, a rotary drum disposed intermediate the inlet and the outlet and having a cylindrical surface permeable to gas for filtering gas passing therethrough, means for rotating the drum at an angular speed sufficiently high so that most particles deposited on the drum surface are thrown off, hopper means for collecting particulate matter obtained from the gas at a bottom of the chamber, fan means for moving gas from the inlet through the cylindrical filtering surface of the drum, into the interior thereof and out of an outlet end thereof, and sealing means for sealing the dirty gas portion of the chamber around the drum from the clean gas portion in the interior of the drum and adjacent to the dirty gas portion; wherein the gas inlet includes a conduit which directs incoming gas towards the hopper means with the conduit terminating where incoming gas particles discharge from the conduit do not impinge directly onto the cylindrical surface of the drum but the conduit is sufficiently near to the drum for incoming gas to flow to the drum.

The conduit is sufficiently close to the drum so that the gas and some of the lighter dust particles discharged from the conduit flow toward the drum. Rotation of the drum develops a centrifugal force on the filter element which counteracts negative pressure in the interior of the drum set up by the fan means. Thus the forces on the filter element are substantially neutralized and the filter, as a result, does not deteriorate as in a conventional dust and fume collector in which large intermittent and continuous stresses are applied to the filter bag. By directing the incoming gas toward the hopper means so that it does not impinge directly on the filter element, a significant portion of dust particles discharged from the conduit are collected directly by the hopper means without being scattered throughout the dirty gas chamber. In addition, deterioration of the filter element as would be caused if such dust particles were allowed to impinge directly on the filter is avoided. The remaining dust particles that flow to the filter element are continuously thrown off of the drum due to the centrifugal force developed by its rotation by ensuring that the filter element does not over a period of time become clogged with dirt. This self-cleaning feature of the present dust collector avoids the regular and expensive maintenance costs involved in conventinal dust and fume collectors. It also avoids the requirement for having to have a large vacuum system to accomodate large pressue drops across the filter element when the latter becomes clogged. Unlike conventinal dust and fume collectors, the present one does not require excess capacity as there is no need to isolate any portion for cleaning on a regular basis.

Since the only moving part required in the present invention is the drum, the reliability of the present dust and fume collector is substantially better than conventional ones.

An added advantage is the absence of substantial noise which results when conventional bags are shaken or pulse jets are applied in the reverse direction to clean the bags. The filter fabric required to cover only the cylindrical surface of the drum is simple in structure whereas existing filter bags for conventional dust collectors are expensive to make and the cartridges used in place of bags are even more expensive. Finally, and perhaps most significantly, the present invention permits the size of the filter material to be greatly reduced over that of conventional dust collectors. Since the area of the cylindrical surface of the drum is continuously kept clean, the amount of gas which will pass through a square foot of the filter cloth will not be reduced during operation and the filter flow velocity can be as high as 500 feet per minute. Because of the latter factor, it is possible to reduce the amount of filter cloth area required by a factor of approximately 25 to 50 times that required for conventional dust collectors. The size reduction in housing volume is approximately 3 to 10 times less than conventional units.

Preferably, the axis of rotation of the rotary drum is horizontally disposed and the drum is rotatable such that its cylindrical surface in the region of the closest approach to the dirty gas inlet moves in substantially the same direction as the incoming dirty gas discharged from the latter. Thus the rotation of the rotary drum by not being opposite to the direction of the incoming gas does not scatter the dust particles throughout the chamber and degrade the filter.

By forming the conduit so that it extends substantially the length of the drum incoming dirty gas can be uniformly discharged along the length of the drum and such gas can then flow in a uniform path length along the length of the drum to the cylindrical surface thereof. This provides for a more efficient operation than if the drum were vertically aligned.

Advantageously, the conduit extends downwardly from the top of the chamber substantially vertically and has a portion with a cross section which converges perpendicularly to the rotational axis of the drum for increasing the velocity of the incoming gas by the venturi effect. For a typical flow of one thousand cubic feet per minute, the velocity of the incoming gas can be increased to approximately four thousand feet per minute so that the heavier dust particles in the gas travel directly to the collecting hopper.

By arranging an outward flare of less than seven degrees from the axis of the conduit at the terminal, the discharged incoming dirty gas disperses into a diverging stream which provides for more efficient collection by the hopper.

The cylindrical surface of the drum may be a perforated rigid sleeve combined with a flexible filter element covering the outer surface of the perforated sleeve. By snugly binding the sleeve around circumferential bands at opposed ends thereof, upon rotation of the drum, the filter element intermediate the circumferential bands floats away from contact with sleeve by bulging outwardly. Consequently, on the interior of the filter element there is formed a plenum between the filter element and the perforated sleeve permitting an effective 100% of the filter area to be used in the filtering process. If the filter element were held tightly against the sleeve throughout its whole area the effective filtering area would be limited to the open area of the perforations. The bulging effect avoids this limitation as any filtered gas on the interior of the filter element can flow transversely to the nearest open area into the interior of the drum. For very large drums an additional band can be formed around the centre of the drum so that bulging occurs from the centre band in both directions out toward the end bands.

Preferably the sealing means includes a felt ring held in lightly pressed engagement with a corresponding annular smooth surface of the drum at an end thereof proximate the clean air outlet from the chamber. The greater the density of the felt, the more effective will be the seal.

By arranging for circumferential pressure to be applied to the felt ring around its outer cylindrical surface the seal can be made self-adjusting. Any air which succeeds in passing through the felt will be filtered thereby and not deteriorate the quality of the clean air escaping from the outlet. Moreover, air flow through the filter seal helps to prevent overheating, and thereby adds to the life and effectiveness of the seal. Additionally, dust particles deposited in the seal further assist in the filtering of additional dirty air which attempts to pass through the felt material. Because of the relatively low pressure required to be exerted on the sealing surface of the felt which is no more than one to two ounces per square inch, the result is a very long lifetime.

Preferably, the open area of the perforated sleeve is at least 30% of the total area of the perforated sleeve.

The fan means may include a set of fan blades affixed to the interior of the drum. Installation of the fan in this way avoids the need for separate ducts, and separate motors which would otherwise be required and which is necessitated in conventional dust collectors.

The present invention may include a pair of rotary drums in the chamber mounted with their axes of rotation substantially parallel, the drums being counter-rotatable in a direction such that in the region of closest approach of their cylindrical surfaces, the surfaces move in substantially the same direction as incoming dirty gas.

By arranging the drums so that their axes of rotation are horizontally disposed in the chamber and the dirty gas inlet conduit running from the top of the chamber substantially vertically, between the two drums the efficiency of gas flow from the conduit to the drums is maximized. Moreover, by counter-rotation of the drums so that they move in the direction of the incoming gas in the region adjacent the inlet conduit, any tendency to scatter the incoming dust particles, to degrade the filter, and to create turbulent gas flow near the drums is avoided.

By achieving a reduction of required filter area by 25 to 50 times that of conventional filter systems, it is possible to build economical filtering systems for high temperature applications. Suitable filtering materials for this purpose are metal cloth, sintered porous metal, ceramic cloth or porous ceramic material. The latter materials can be employed at temperatures of up to 2000°F on a continuous basis and in short bursts, at temperatures of up to 2600°F.

An important application of such high temperature systems is the elimination of sulphur dioxide from hot gases discharged as waste gas by many industrial operations. In this case, by pre-mixing of the sulphur dioxide gas with certain chemical compounds in dust form to generate agglomerated particles, the latter particles could then be filtered in the present dust and fume collector utilizing such high temperature elements and the cleaned gas could then be used as a heat source.

Some embodiments of the invention will now be described, by way of example, with reference to the accompanying drawings, in which:

Figure 1 is a perspective view of the dust and fume collector according to the invention,

Figure 2 is a sectional view taken along the line 2-2 of Figure 1,

Figure 3 is an end view of the device illustrated in Figures 1 and 2 taken at the air outlet end with the outlet plenum removed,

Figure 4 is an end view of the device opposite the end shown in Figure 3,

Figure 5 is a perspective view of one of the drums illustrated in Figures 2 and 3,

Figure 6 is an end view of one of the drums from the open end thereof,

Figure 7 is a sectional view of a portion of the drum showing a pressure difference type self-adjusting drum felt seal,

Figure 8 is a sectional view of a portion of the drum showing a spring-tensioned self-adjusting drum seal,

Figure 9 is a sectional view of a portion of the drum showing a pneumatic type of self-adjusting drum seal,

Figure 10 is an elevational view of the outlet end of a high temperature embodiment of the device,

Figure 11 is a sectional view of the embodiment of Figure 10 taken along the line 11-11; and

Figure 12 illustrates a drum with a frustro conical end connecting the drum to a guide wheel and sealing surface of reduced diameter, and

Figure 13 is a sectional view of an axially fed dust and fume collector.

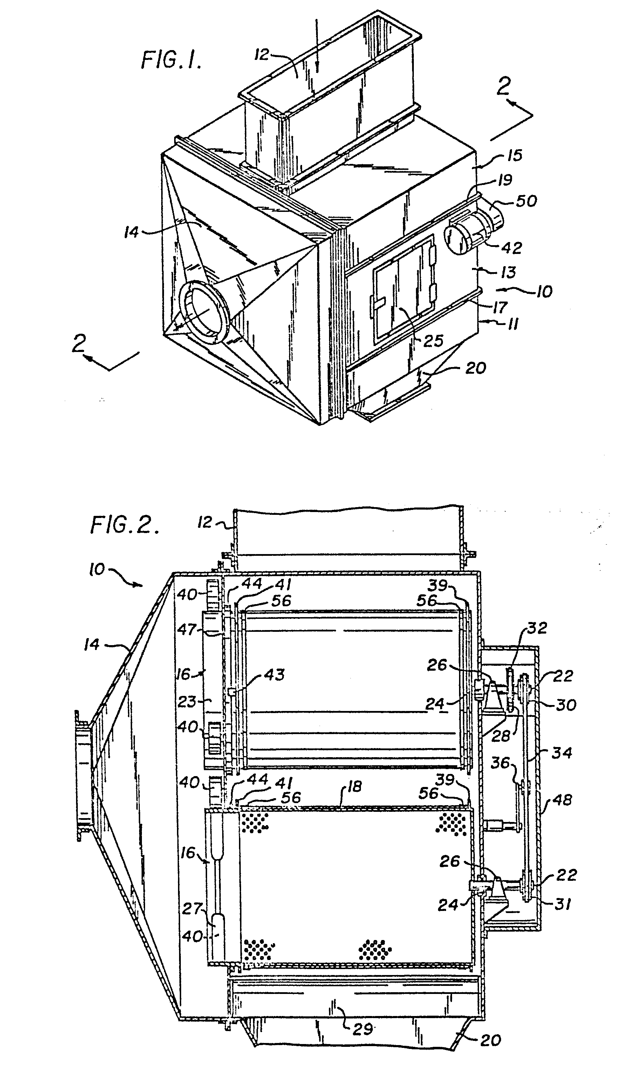

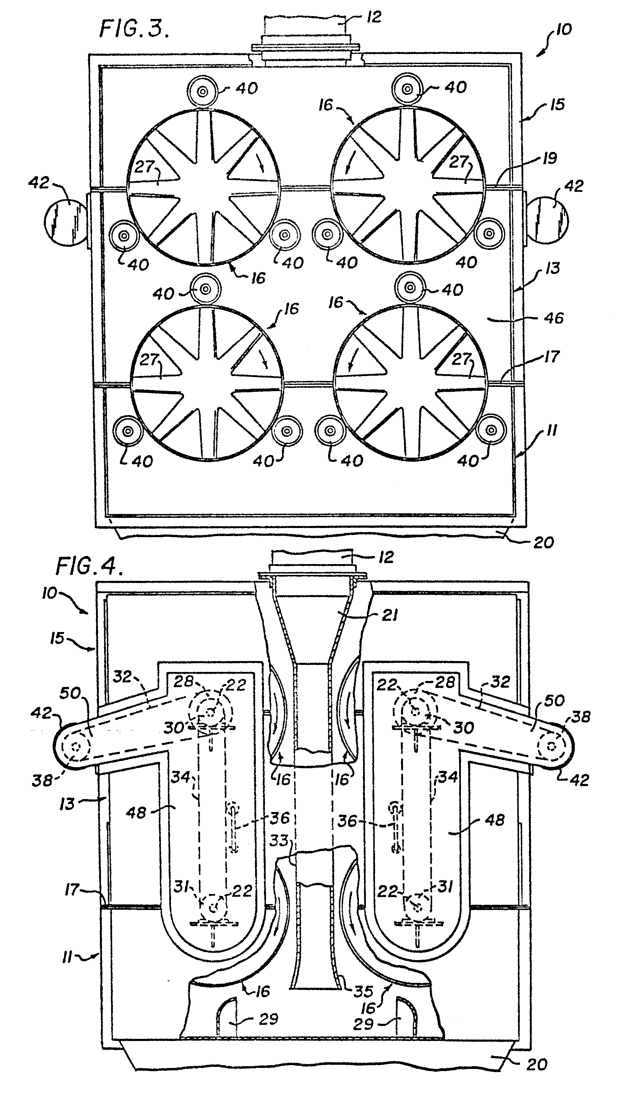

The dust and fume collector illustrated in Figures 1 to 3 consists of a chamber 10 made up of a lower housing section 11, a middle housing section 13 and an upper housing section 15, with the lower housing section 11 being attached to the middle housing section 13 and the middle housing section 13 being attached to the upper housing section 15 along housing joints 17 and 19, respectively. The middle housing 13 is provided with access doors 25 on either side of the chamber 10 to permit access for servicing. A dirty gas inlet is provided by a conduit 12 at the top of the upper housing section 15, which directs the dirty gas through a rectangular entrance venturi 21 (see Figure 4) having a converging cross section in a direction transverse to the rotational axes of the drums for increasing the velocity of the inlet gas. The entrance venturi 21 directs the inlet gas vertically downwards toward the bottom of the chamber 10 where there is formed a dust or particulate collecting hopper 20. The terminal end 35 of the conduit 12 is flared outwardly to an angle of divergence of 7 degrees or slightly less in a direction transverse to the drum axes to disperse particles from the incoming dirty gas over the hopper surface 20. The conduit 12 width along the direction of the drum axes of rotation is substantially equal to the length of the drums so as to disperse the dirty gas uniformly with respect to the length of the drums towards the hopper 20. A pair of elongated baffles 29 extend parallel to and below the two bottom drums leaving a restricted clearance between each bottom drum 16 and its associated baffle 29. Heavier particles that tend to curve toward the drum hit the baffles and fall into the hopper 20. Lighter particles which pass between the drum 16 and baffle 29 experience a sudden enlargement and lose velocity falling into the hopper 20.

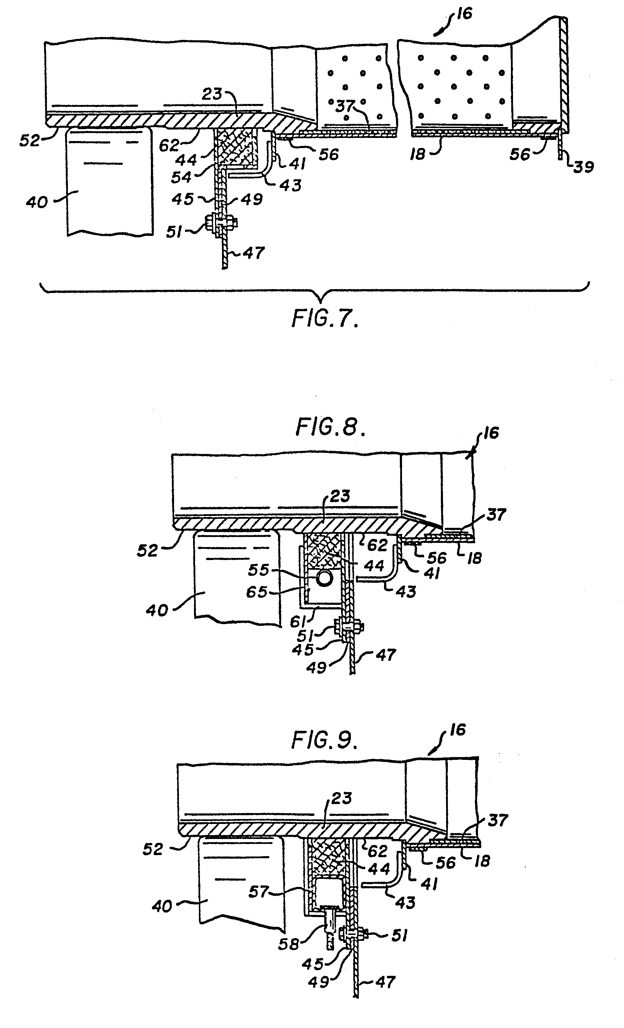

As shown in Figures 2 and 3 inside the chamber 10 are a plurality of horizontally disposed counter-rotating drums 16 each supported at one end by a shaft 22 rotatable within bearings 26 and at the opposite end by means of three rubber-tired guide wheels 40 mounted to a plate 47 extending across one end of the chamber 10. Drum seals 44 and shaft seals 24 prevent the escape of incoming dirty gas out of the chamber. A gas outlet plenum 14 is attached at an outlet end of the chamber 10 with the latter having fluid communication with the interior of the drums 16. The cylindrical surfaces of each of the drums 16 is made of perforated metal having approximately 50% open spaces. In place of perforated metal, a wire mesh cylindrical surface could be advantageously used. The entire surface is perforated except for a narrow annular drum ring 23 at the outlet end of each drum which provides a smooth rolling surface for the guide wheels 40. Over the perforated cylindrical surfaces of each drum is wrapped a filter fabric 18 which extends between the large drum seal 44 and an opposite end of the drum, the width of the fabric being limited by two flinger rings 39 and 41 at each end of the drum (see Figure 7). Mounted on the sides of the housing 10 are a pair of drive motors 42 which are coupled by means of belts 32 extending between pulleys 38 on the drive motor shafts and pulleys 28 on the upper drums. The shafts 22 of the upper drums, in turn, are

coupled by means of belts 32 extending between pulleys 30 on the upper drum shafts 22 and pulleys 31 on the lower drum shafts 22. The belts 34 are tensioned by means of spring loaded belt tensioners 36. The entire pulley assemblies are enclosed within casings 48 and 50 affixed to one end of the chamber 10.

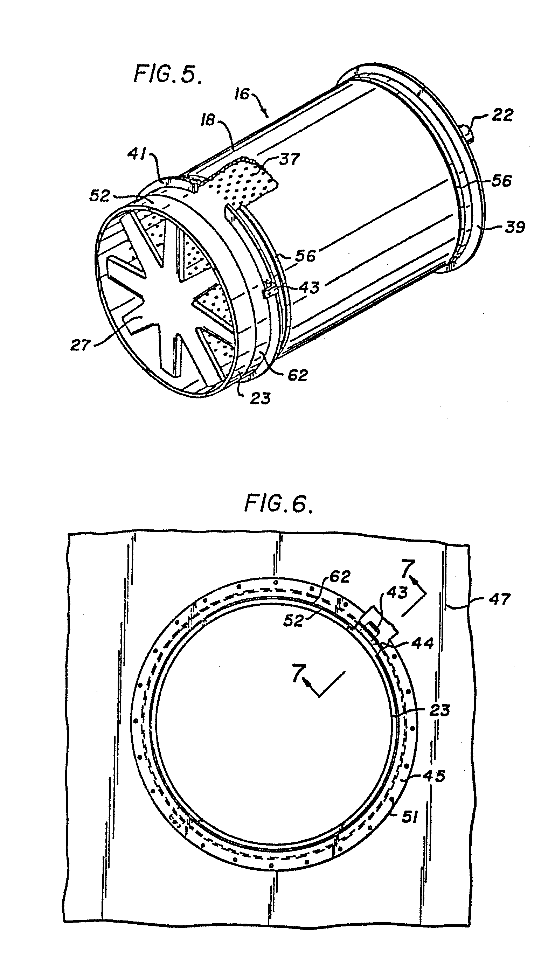

Illustrated in Figure 5 in perspective is a drum assembly of one of the drums 16. The filter cloth 18 is placed over a perforated sleeve 37 of the drum extending from a flinger ring 41 at the felt sealing ring 44 to a flinger ring 39 at the other end of the drum. The cloth 18 is tightly clamped at either end by a pair of flat plastic straps 56. Flinger rings 39 and 41 adjacent each end of the filter cloth 18 extend circumferentially around the drum. On diametrically opposed sides of the flinger ring 41 there is welded a pair of wiper fingers 43 which extend outwardly parallel to the drum axis a short distance over the seal housing.

At an outlet end of each drum there are a set of fan blades 27 affixed directly to the inner surface of the drum in order to create a negative pressure within each drum.

Figure 6 illustrates an end view of the drum 16 taken at the outlet end without the fan blades 27. The annular drum ring 23 has a smooth guide wheel contacting surface 52 and an adjacent slightly larger, smooth sealing ring contacting surface 62 against which is lightly pressed into sealing engagement a high density felt sealing ring 44.

Figure 7 shows a cross section of the drum taken along line 7-7 of Figure 6. Here the felt seal housing has a plurality of holes 54 along the cylindrical surface thereof to permit the outer cylindrical surface of the housing to communicate with the dirty gas portion of the chamber 10 which is at a higher pressure than the clean gas portion adjacent flange 45. This pressure difference causes seal 44 to be pressed into engagement with drum ring surface 62. An alternative sealing arrangement is shown in Figure 8. The felt seal 44 is contained within a felt housing formed by annular flange 45 and outer flange 65 which are coupled together by lugs 61.

An inwardly pressure is applied to the felt seal 44 by a tensioning ring 55 consisting of four short tensioned springs at 90 degrees apart coupled to four intermediate plastic straps. The spring tension is set to apply 1 to 2 ounces per square inch of pressure by the felt onto the drum ring seal contacting surface 62. Flange 45 has a plurality of bolt holes which register with corresponding bolt holes in plate 47 affixed to the chamber housing 10 and when bolted together by bolts 51 support the seal housing. A pair of wiper fingers 43 mounted at 180 degrees apart to the flinger ring 41 extend toward the seal housing and rotate with the drum 16. In both Figures 7 and 8 an annular gasket 49 between flange 45 and plate 47 seals the two when bolted together by bolts 51.

Figure 9 illustrates a third alternative seal pressurizing arrangement in which an annular rubber tube 57 is placed in the felt seal housing against the outer cylindrical seal surface. A valve 58 in the tube passes through the housing and is used to connect an air line (not shown) from the tube 57 to an external pressure regulator (not shown). By setting the regulator to apply a pre-selected pressure to the tube 57, a self-adjusting seal is formed. The remaining elements correspond to those of Figures 7 and 8.

In operation, dirty air from a polluted space is drawn into the chamber 10 through the dirty air inlet conduit 12 as a result of the negative pressure created in the chamber by rotation of the fan blades 27 mounted at each end of each of the drums 16. The dirty air is directed through the inlet venturi 21 where it experiences an increase in velocity thus providing greater kinetic energy to the particles contained in the incoming gas. The greater velocity given to such particles assists in their reaching the dust collecting hopper 20 without deflection toward the rotating drums 16. By arranging the drums 16 to counter-rotate with their surfaces adjacent an inlet conduit straight portion 33 moving parallel with the direction of flow of the incoming gas, a smoother less turbulent downwardly flow of the incoming gas is achieved. The lighter dust particles contained in the gas are then drawn through the filter material 18 wrapped around the perforated surfaces of each drum 16 where they are deposited. The clean air passes into the interior of each drum. Rotation of the drum surfaces provides each deposited particle with a centrifugal force directed in a direction opposite to the forces created by the pressure differential due to rotation of the fan blades 27. With a sufficient angular velocity the centrifugal force results in the discharge of the dust particles so deposited and their subsequent falling into the dust collecting hopper 20. Thus, a continuous filtering action as well as a continuous self-cleaning action is provided by the rotating filter elements around each drum. Generally the drums should be rotated with sufficient circumferential speeds such that the centrifugal forces on the particles are greater then the force on them due to the pressure difference across the cylindrical filter surface. The air molecules, not having much mass, are not affected by centrifugal forces and thus pass through the filter relatively easily. The maximum speeds of rotation are limited by the allowable stresses in the drum material and filter. The percentage of open area of the drum perforations should be at least 30% of its total area.

Obviously, modules of separate drum assemblies can be stacked in order to increase capacity.

Since the filter material is clamped only at opposite ends of the drums 16, as its speed of rotation increases it reaches a point where the centrifugal forces on the filter exceed the forces due to the pressure difference between the dirty gas portion of the chamber and the interior of the drums where the filter bulges outwardly and floats free of the cylindrical perforated sleeve. At this point the effective filtering area of the filter becomes equal to 100% of its area rather than merely the area of the perforations. The area between the filter and the sleeve thereafter operates as a plenum.

Any tendancy of dust to find its way between the ends of the filter element and the drum sleeve is prevented by the flinger rings 39 and 41. Dust at the ends of the drum is thrown off of the drum by the flinger rings 39 and 41. Also the amount of dust build-up around the felt seal housing is limited by the rotating wiping fingers 43.

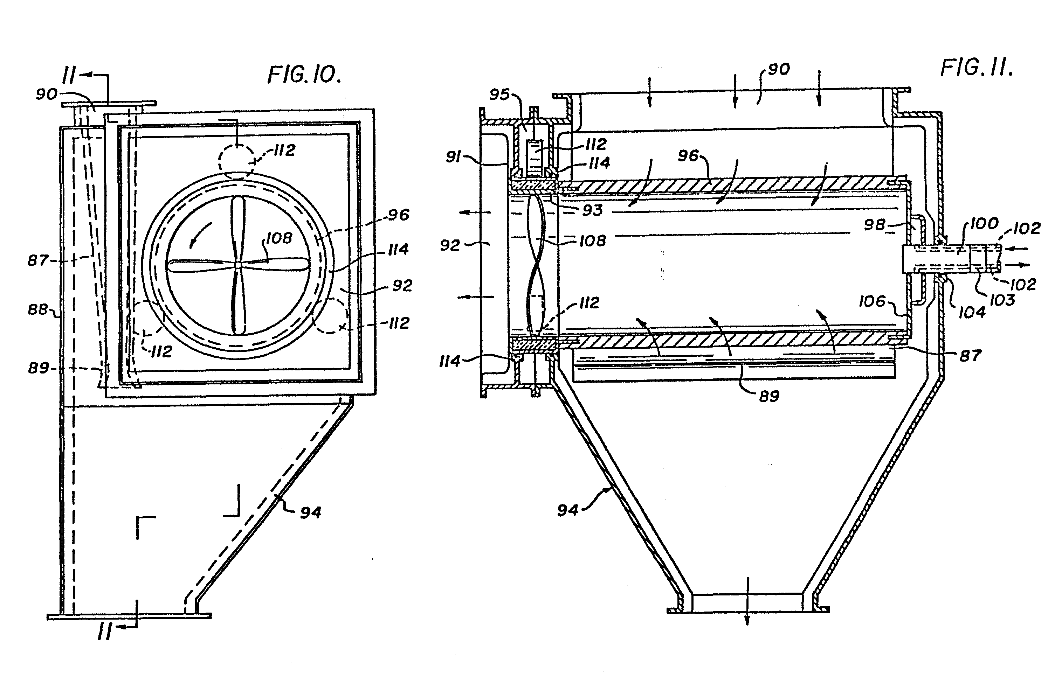

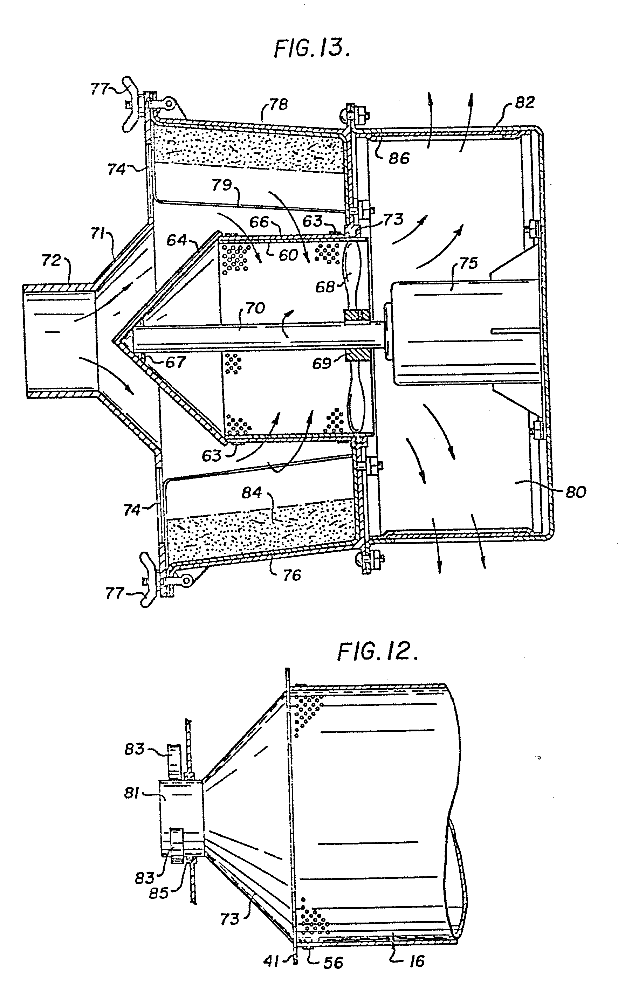

Figure 10 and 11 illustrate a high temperature embodiment of the invention in which a housing 88 lined with a refractory material such as castable mortar or bricks encloses a rotating drum 96 made of porous ceramic material. The rotating drum material may also be made from sintered porous metals, ceramic cloth or metallic cloth material. One end of the drum is closed by means of a drum end plate 106 made from a high temperature alloy. The latter plate is water-cooled by means of a ring 98 supplied through water passageways 102 contained in a drum shaft 100. The drum shaft 100 sealed by means of a high temperature drum shaft seal 104 mounted in housing 88. The shafts turn within a bearing 103 resulting in rotation of the drum 96. The opposite end of the drum is held in place by means of three guide wheels 112 each displaced at an angle of 120 degrees with respect to adjacent guide wheels. The interior of the drum has a pair of fan blades 108 installed therein also made of a high temperature alloy. The fan blades 108 exhaust air through a clean air outlet 92 to either a heat exchanger (not shown) or to atmosphere.

At the bottom of the housing 88 there is provided a dust removal hopper 94. Dirty air is directed into the housing 88 by means of ceramic inlet conduit 90 of converging rectangular cross section 87 and an outwardly flared terminal 89 with a divergence of 7 degrees. The conduit 90 has a width along the axis of the drum substantially equal to the length of the drum 96.

An inner annular extremity 93 of the drum 96 made of high temperature steel such as titanium alloy adjacent the gas outlet 92 has affixed an outer annular extremity 91, also made of high temperature steel by an intermediate castable insulating ceramic material such that the outer annular extremity is insulated from the inner one. The thermal isolation of the inner and outer extremities prevents the guide wheels 112 from becoming overheated.

Chamber 95 is air-cooled. Along an exterior surface of extremity 91 are a pair of spaced apart annular rings 114 which seal the outlet 92 from the inlet chamber.

The operation of the high temperature unit is similar to that illustrated in Figures 1 to 5. In the case of the high temperature unit, dirty air enters vertically downwardly through inlet conduit 90 through venturi 87 and out from flared end 89 located adjacent and below the drum 96. In response to the differential pressure created by rotation of fan 108, the gas then passes through a high temperature filter element comprising drum 96. The drum 96 is rotated counterclockwise so that its cylindrical surface when near the conduit 90 moves downwardly. The dust particles present in the inlet air which are deposited on the surface of the drum 96 fall into a dust collecting hopper 94 due to centrifugal force and gravity. The dust in the hopper 94 is removed continuously by means of a water-cooled screw conveyor (not shown) or water-cooled rotary airlock valve (also not shown). The clean air that passes through the outlet 92 is either discharged into the atmosphere or passes through a heat exchanger (not shown). Such high temperature units have application in electric arc furnaces, coal furnaces, blast furnaces, coke making operation, steel mills, chemical refineries and coal and oil fired electrical generating stations. They become economical in light of the fact that they require 25 to 50 times less surface area than is required by conventional dust and fume collectors.

Figure 12 illustrates a drum 16 with a frustro conical end 73 connecting the drum 16 to a cylindrical surface 81 of reduced diameter. Surface 81 is used as both a seal contacting surface for an annular seal 85 and a rolling surface for the guide wheels 83. By reducing the diameter of surface 81, a reduced circumferential speed of rotation as compared with that of drum 16 results thereby reducing the wear on both the guide wheels 83 and the seal 85.

Figure 13 illustrates an alternative embodiment of the invention when used as a vacuum cleaner. The structure of Figure 13 consists of a rotating drum 60 the cylindrical surface of which is perforated. An inlet area of the drum has a conical dust deflector plate 64 permanently attached to the drum. The dirty air inlet region is sealed at shaft end opposite the conical deflector 64 by an annular felt seal 73 lightly pressed against a smooth end surface of the drum 66 by the pressure differential between a clean air outlet region adjacent a shaft end of drum 66 which is at a lower pressure than the dirty air inlet region similar to that shown in Figure 7. Alternatively, the seal may be of a type as illustrated in Figures 8 or 9. A stretchable annular filtering fabric envelope 66 fits snugly over the perforated portion of the drum. The fabric 66 is tightly strapped at its ends by plastic straps 63. The drum 60 has built into and affixed to it at the end opposite the conical dust deflector plate 64, a series of fan blades 68 which create a partial vacuum inside the drum 60 upon rotation of the latter in response to rotation of a motor shaft 70. The fan blades 68 are affixed to the drum 60 and also to a central collar 69 which slides on motor shaft 70 and is locked thereon by a set screw. With the latter construction the entire drum assembly including plate 64, drum 60, blades 68 and collar 69 are a unitary assembly and can be slid onto motor shaft 70 and located in position by inserting shaft 70 into a mating aperture in plate 67 which, in turn is affixed to deflector plate 64.

A conventional electric motor 75 rotates the shaft 70. The drum structure is contained within a general frusto conical housing 78. To one end of the housing 78 there is clamped by means of wing nuts 77 inlet cover 71 in which one or more clear transparent plastic or glass windows 74 are incorporated. The cover 71 is integral with an inlet hose connection 72. A dust cup 76 slideably fits inside housing 78 and also is clamped in place by wing nuts 77. Clean air exhausted by the fan blades 68 enters into a clean air compartment 80 to which there is attached motor 75 as well as an annular filter ring 82. The stretchable filtering element 82 is held in place by an annular perforated slip-in ring 86.

In operation, dirty air enters in through inlet 72 and is deflected by cone 64 toward the dust cup 76. Dust particles collect around the periphery of cup 76 while air or gas and lighter particles in response to the pressure differential created by the rotation of fans 68 enter onto a filter fabric 66, wound around perforated drum 60, and the cleaned air passes into the interior of the drum. The lighter particles are deposited on the filter fabric following which the deposited particles are thrown off as a result of centrifugal force toward the outer periphery of the cup 76 where they collect in a dust layer 84. The thickness of the dust layer can be viewed through windows 74. Clean air is exhausted by the fan 68 into the clean air compartment 80 and passes out through the filtering ring 82 while at the same time cooling the motor 75.

Servicing of the device can be accomplished by releasing the wing nuts 77 and removing the inlet cover 71.

The dust cup 76 can then be removed and the dust layer 84 deposited around the periphery thereof can then be emptied. The conical or frusto-conical shape of the compartment 78 facilitates the sliding out of the dust cup 76. The clean cup 76 which had contained the layer of dust is then fitted back into place as is the cover 71 and the unit is once again ready for operation. Occasionally, filter element 66 can be removed and washed or replaced.

In the event a horizontal disposition of the assembly is employed, a wire mesh cup 79 located inside the dust cup 76 may be employed to prevent the matted annular dust ring 84 from collapsing onto the rotary drum 60 in response to dropping or banging the vacuum cleaner.

Occasionally, the filtering ring 82 may be replaced or washed but will generally operate unattended for prolonged periods of time.

In the event removal of dust cup 76 is not desired, a disposable paper cup can be inserted into dust cup 76 and removed without removing latter.

Claims:

1.    A dust and fume collector, comprising a filter chamber (10) having a dirty gas portion and a clean gas portion, a dirty gas inlet (12) for directing a flow of dirty gas into the dirty gas portion of said chamber, a clean gas outlet (14) from said chamber, a rotary drum (16) disposed intermediate the inlet (12) and the outlet (14) and having a cylindrical surface (18) permeable to gas for filtering gas passing therethrough, means (30, 31, 32) for rotating the drum (16) at an angular speed sufficiently high so that most particles deposited on the drum surface are thrown off, hopper means (20) for collecting particulate matter obtained from the gas at a bottom of the chamber (10), fan means (27) for moving gas from the inlet (12) through the cylindrical filtering surface (18) of the drum (16), into the interior thereof and out of an outlet end thereof, and sealing means (44) for sealing the dirty gas portion of the chamber around the drum from the clean gas portion in the interior of the drum and adjacent to the dirty gas portion; wherein the gas inlet (12) includes a conduit (21, 33, 35) which directs incoming gas towards the hopper means (20) with the conduit (35) terminating where incoming gas particles discharged from the conduit do not impinge directly onto the cylindrical surface (18) of the drum (16) but the conduit (35) is sufficiently near to the drum (16) for incoming gas to flow to the drum.

2.    A dust and fume collector as claimed in Claim 1, wherein an axis of rotation of the rotary drum (16) is horizontally disposed and the drum (16) is rotatable so that its cylindrical surface (18) at the region (35) of closest approach to said dirty gas inlet moves in substantially the same direction as the incoming dirty gas discharged from said dirty gas inlet (35).

3.    A dust and fume collector as claimed in Claim 2, wherein said conduit (21, 33, 35) extends substantially the length of said drum.

4.    A dust and fume collector as claimed in Claim 2, wherein said conduit (21, 33, 35) extends downwardly from the top of said chamber (10) substantially vertically and has a portion (21) with a cross-section that converges perpendicular to the rotational axis of said drum for increasing the velocity of incoming dirty gas.

5.     A dust and fume collector as claimed in any one of Claims 2 to 4, wherein the terminal end (35) of said conduit has an outward flare of less than 7 degrees from the axis of the conduit but sufficiently large to disperse the incoming gas when leaving the conduit in a diverging stream.

6.     A dust and fume collector as claimed in any one of Claims 2 to 5, wherein the cylindrical surface of said drum (16) includes a perforated rigid sleeve (37) and a flexible filter element (18) covering an outer surface of the perforated sleeve (37), which filter element (18) is snugly bound to said sleeve (37) around circumferential bands (56) at opposed ends thereof such that upon rotation of said drum the filter element (18) floats away from contact with the sleeve (37) intermediate the bands (39, 41).

7.     A dust and fume collector as claimed in any one of Claims 2 to 6, further comprising a baffle (29) located below the drum (16) proximate thereto and extending parallel to the axis of the drum (16) substantially from one end to the other thereof for shielding against dust particles travelling from the terminal end (35) of the conduit towards the drum and for establishing a restricted opening between the drum (16) and the baffle (29) so that a substantial portion of particles passing through the opening loose speed and fall downwardly.

8.     A dust and fume collector as claimed in any one of Claims 1 to 7, wherein the sealing means includes a ring of felt (44) held in pressed engagement with corresponding annular smooth surface (62) of the drum (16) at an end thereof proximate the clean gas outlet (14).

9.     A dust and fume collector as claimed in Claim 8, wherein the felt ring (44) is pressed against the associated smooth surface (62) of the drum by the pressure difference between the dirty gas portion and clean gas portion of the chamber (10).

10. A dust and fume collector as claimed in Claim 8, wherein the felt ring (44) is pressed against the associated smooth surface (62) of the drum by an annular inflatable tube (57) concentric with and contiguous to the associated outer surface of the ring (44), which tube (57) is pressurized to a pre-selected amount by a pressure regulating valve coupled to a source of pressurized fluid.

11. A dust and fume collector as claimed in Claim 8, wherein the felt ring (44) is pressed against an associated smooth surface (62) of the drum by a spring-tensioned elongated flexible member (55) concentric with and contiguous to an associated outer surface of said ring (44).

12. A dust and fume collector as claimed in any one of Claims 8 to 11, wherein a dust limiting finger (43) is affixed to the drum (10) proximate the felt ring seal (44) such that upon rotation of the drum the finger (43) clears away excessive dust build-up around said felt ring (44).

13. A dust and fume collector as claimed in Claim 6, further including a pair of annular plates (39, 41) each mounted at an associated end of the drum (16) contiguous to an end of said filter element (18) for blocking dust from entering between the filter (18) and the sleeve (37).

14. A dust and fume collector as claimed in Claim 6, wherein the open area of the perforated sleeve (37) is at least 30% of the total area of the perforated sleeve.

15. A dust and fume collector as claimed in Claim 1, wherein the fan means includes a set of fan blades (27) affixed to the drum (16) in the clean air portion of the chamber.

16. A dust and fume collector as claimed in any one of Claims 1 to 15, comprising a pair of said rotary drums (16) mounted in the chamber (10) with their axes of rotation substantially parallel, said drums (16) being counter-rotatable and being intermediate the inlet (12) and the outlet (14).

17.    A dust and fume collector as claimed in Claim 16, wherein the axes of rotation of the drums (16) are horizontally disposed and the drums are counter-rotatable such that their cylindrical surfaces in the region of closest approach move in substantially the same direction as the discharge of incoming dirty gas from the dirty gas inlet (33, 35) which dirty gas inlet passes between the drums.

18.    A dust and fume collector as claimed in Claim 16 or Claim 17, comprising a baffle (29) located below each of said drums (16) proximate thereto and extending parallel to the axes of the drums substantially from one end to the other thereof for shielding against dust particles travelling from the terminal end (35) of the conduit (12) towards the drums and for establishing a restricted opening between the drums (16) and the associated baffles (29), so that a substantial portion of particles passing through the opening loose speed and fall downwardly toward the hopper mens (20).

19.    A dust and fume collector as claimed in Claim 16 or Claim 17, wherein the cylindrical surfaces (96) of the drums (16) include a metal cloth or a ceramic cloth.  .

20.    A dust and fume collector as claimed in Claim 16 or Claim 17, wherein the cylindrical surfaces (96) of the drums are sintered porous metal or a porous ceramic material.

21.    A dust and fume collector as claimed in any one of Claims 16 to 20, wherein the interior of the chamber (10) is lined with refractory material (88).

22.    A dust and fume collector as claimed in Claim 1, wherein an end of the drum (16) has a frusto conical shaped tube part (73) connected to a cylindrical end part (81) which provides a seal contacting surface of reduced diameter.

23. A dust and fume collector as claimed in Claim 1, including a conical deflector (64) attached to an end of the drum (60) remote from the outlet, and wherein the inlet (72) is axially aligned with the drum (60) such that incoming gas impinges on the deflector (64) and is dispersed around the drum (60).

24. A dust and fume collector substantially as herein described with reference to the accompanying drawings.

0095354

FIG.1.

FIG.2.

FIG.3.

FIG.4.

FIG.5.

FIG.6.

FIG.7.

FIG.8.

FIG.9.

FIG.11.

FIG.10.

FIG.13.

FIG.12.

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A- 599 447 (TH.W.S. HUTCHINS) * Figures 1-3; page 2, lines 14-102 * | 1,2,15 | B 01 D 46/26 A 47 L 9/10 |
| A | US-A-3 486 313 (W. THOMAS) | | |
| A | NL-C- 103 843 (NV. BRONSWERK) | | |

TECHNICAL FIELDS
SEARCHED (Int. Cl. ³)

B 01 D 46/00
A 47 L 9/00

The present search report has been drawn up for all claims

| Place of search | Date of completion of the search | Examiner |
|---|---|---|
| THE HAGUE | 05-09-1983 | BOGAERTS M.L.M. |